# EUROPÄISCHE PATENTSCHRIFT

(11) **EP 3 737 627 B1**
(45) Veröffentlichungstag und Bekanntmachung des Hinweises auf die Patenterteilung: **12.02.2025**
(21) Anmeldenummer: 19701031.7
(22) Anmeldetag: 08.01.2019
(51) Int. Cl.: B65G 47/90, B65G 47/91, B65B 43/12, B65B 69/00, B65H 31/30, B65H 1/30, B65G 65/00, B65H 1/02, B25J 15/02, B25J 15/06, B65H 5/00

(54) **FALTSCHACHTELSTAPEL-UMSETZVORRICHTUNG IN EINER VERPACKUNGSMASCHINE UND VERFAHREN ZUM UMSETZEN EINES FALTSCHACHTELSTAPELS IN EINER VERPACKUNGSMASCHINE**
FOLDING BOX STACK TRANSFERRING DEVICE IN A PACKAGING MACHINE, AND METHOD FOR TRANSFERRING A FOLDING BOX STACK IN A PACKAGING MACHINE
DISPOSITIF DE TRANSFERT DE PILES DE BOÎTES PLIANTES DANS UNE MACHINE D'EMBALLAGE ET PROCÉDÉ SERVANT À TRANSFÉRER UNE PILE DE BOÎTES PLIANTES DANS UNE MACHINE D'EMBALLAGE

(30) Priorität: 11.01.2018 DE 102018000161
(43) Veröffentlichungstag der Anmeldung: 18.11.2020
(73) Patentinhaber: IWK Verpackungstechnik GmbH, 76297 Stutensee (DE)
(72) Erfinder: BEHRINGER, Thomas, 76467 Bietigheim (DE)
(74) Vertreter: Lichti - Patentanwälte Partnerschaft mbB
(86) Internationale Anmeldenummer: PCT/EP2019/050329
(87) Internationale Veröffentlichungsnummer: WO 2019/137907

(56) Entgegenhaltungen:
- EP-A1- 0 955 259
- CH-A2- 703 288
- CH-B1- 703 288
- JP-A- H03 152 091
- JP-A- H1 179 649
- US-A- 5 425 565
- US-A1- 2003 120 387

## Beschreibung

Die Erfindung betrifft ein Verfahren zum Umsetzen eines Faltschachtelstapels in einer Verpackungsmaschine gemäß dem Oberbegriff des Anspruchs 1.

In einer Verpackungsmaschine und insbesondere einer sogenannten Kartoniermaschine wird ein Produkt in einer Faltschachtel verpackt. Die Faltschachtel liegt zunächst als flacher, fast ebener Zuschnitt vor. Eine Vielzahl entsprechender flacher Faltschachteln werden unter Bildung eines Faltschachtelstapels aufeinander gestapelt, wobei die Stapelrichtung normal zu den ebenen Faltschachteln verläuft.

Die Faltschachteln werden außerhalb der Verpackungsmaschine zu dem Faltschachtelstapel gestapelt oder bereits in gestapelter Form angeliefert. Sie müssen mittels einer Faltschachtelstapel-Umsetzvorrichtung ergriffen und in einen Schacht eingesetzt werden, aus dem sie von der Verpackungsmaschine einzeln und nacheinander am unteren Ende des Schachtes entnommen werden.

Aus der DE 10 2012 107 984 A1 ist es bekannt, den Faltschachtelstapel üblicherweise in horizontalter Ausrichtung, d.h. mit einer horizontal verlaufenden Stapelrichtung an seinen beiden Stirnseiten jeweils mit einer Greifbacke in Anlage zu bringen. Die beiden Greifbacken werden mittels eines Antriebs aufeinander zu bewegt, wodurch der Faltschachtelstapel in Stapelrichtung zusammengepresst und zwischen den Greifbacken eingespannt wird. Die Spannrichtung fällt dabei mit der Stapelrichtung zusammen. Wenn die Greifvorrichtung dann mittels eines Manipulators, beispielsweise eines Gelenkarmroboters angehoben wird, wirken auf den Faltschachtelstapel infolge seines Eigengewichts Querkräfte und Biegemomente ein, die durch die Spannkraft der Greifbacken und die zwischen benachbarten Faltschachteln auftretende Reibung aufgenommen werden müssen. Zusätzlich wirken aufgrund des Umsetzens des Faltschachtelstapels dynamische Lasten auf den Faltstapel ein. Dabei kann es passieren, dass sich die Faltschachteln relativ zueinander verschieben, wodurch der Faltschachtelstapel seine Form verliert und die weitere Handhabung schwierig ist, da er in diesem verformten Zustand nicht in den Schacht eingeführt werden kann. Wenn eine Faltschachtel aus dem Faltschachtelstapel herausrutscht, verliert der Faltschachtelstapel seine Stabilität und alle Faltschachteln fallen aus der Umsetzvorrichtung heraus, was üblicherweise dazu führt, dass die Verpackungsmaschine angehalten werden muss, um die einzelnen Faltschachteln einzusammeln. Um dies zu vermeiden, ist gemäß der DE 10 2012 107 984 A1 am Halter der Greifbacken eine Saugeinrichtung vorgesehen, die auf den Faltschachtelstapel einwirkt. Dadurch werden die Faltschachteln während des Umsetzens zusätzlich stabilisiert.

Eine gleichartige Faltschachtelstapel-Umsetzvorrichtung ist auch aus der US 2003/0120387 A1 bekannt.

Um einen Faltschachtelstapel sicher aufzunehmen, sollten die Greifbacken in Richtung der Längsmittelachse des Faltschachtelstapels eine Druckkraft aufbringen und die Saugvorrichtung muss zuverlässig mit der Oberseite des Faltschachtelstapels in Anlage gebracht werden. Wenn Faltschachtelstapel unterschiedlicher Form und unterschiedlichen Durchmessers mit der Faltschachtelstapel-Umsetzvorrichtung umgesetzt werden sollen, ist eine Anpassung der Form und der Position der Greifbacken sowie der Saugvorrichtung notwendig. Dies ist zeitaufwändig und kostenintensiv.

In der CH 703 288 A2 wird ein Verfahren zum Umsetzen eines Faltschachtelstapels in einer Verpackungsmaschine beschrieben und gezeigt, bei dem ein Faltschachtelstapel zwischen zwei Greifbacken einer Greifvorrichtung in einer Spannrichtung eingespannt wird, die der Stapelrichtung des Faltschachtelstapels entspricht. Zu diesem Zweck werden die beiden Greifbacken auf entgegengesetzten Seiten mit dem in einem kastenartigen Gehäuse befindlichen Faltschachtelstapel in Anlage gebracht, woraufhin die Greifbacken zusammengefahren und der Faltschachtelstapel eingeklemmt und aus dem kastenartigen Gehäuse herausgehoben wird. Dabei kann eine Saugvorrichtung vorgesehen sein, die mit der Oberfläche des Faltschachtelstapels in Anlage gebracht und während des Umsetzens des Faltschachtelstapels aktiviert wird. Anschließend wird der Faltschachtelstapel auf einem Tisch abgelegt und zwischen zwei Haltern eingeklemmt. Dann wird die Greifvorrichtung um 90° gedreht und der Faltschachtelstapel wird an seinen Längsseiten ergriffen und eingespannt und vom Tisch abgehoben.

Das mehrfache Ergreifen, Einspannen und Absetzen des Faltschachtelstapels verlängert nicht nur die Prozesszeit, sondern es besteht auch das Risiko, dass der Faltschachtelstapel bei der Entnahme aus dem kastenartigen Gehäuse nicht richtig ergriffen und zusammengespannt wird, da er nur um ein geringes Maß aus dem kastenartigen Gehäuse hervorsteht. In der US 5 425 565 A ist ein Verfahren zum Umsetzen eines Faltschachtelstapels in einer Verpackungsmaschine nach dem Oberbegriff des Anspruchs 1 beschrieben, bei dem der Faltschachtelstapel zwischen zwei Halteplatten, die als Fingerplatten ausgebildet sind, bereitgestellt wird. Eine Umsetzvorrichtung wird auf den Faltschachtelstapel so abgesenkt, dass Haltefinger sich von oben in die Fingerplatten schieben und somit den Faltschachtelstapel ebenfalls zwischen sich aufnehmen. Die Haltefinger werden zusammengefahren, wodurch der Faltschachtelstapel zusammengedrückt wird. Dabei werden die Halteplatten geschwenkt, wodurch der Faltschachtelstapel gewölbt und gegen einen oberen Anschlag gedrückt wird. Um die Haltefinger mit den Fingerplatten in Eingriff zu bringen und den Faltschachtelstapel zu übernehmen, ist eine sehr präzise Bewegung notwendig, die im tatsächlichen Betrieb der Umsetzvorrichtung aufgrund der Arbeitsgeschwindigkeit nur schwierig zu erreichen ist. Darüber hinaus besteht durch die Wölbung des Faltschachtelstapels die Gefahr, dass dieser instabil wird, da die auf den Faltschachtelstapel einwirkende Spannkraft nur in dessen unteren Bereich wirkt. Der Erfindung liegt die Aufgabe zu Grunde, ein Verfahren zum Umsetzen eines Faltschachtelstapels in einer Verpackungsmaschine zu schaffen, bei dem ein sicheres Ergreifen des Faltschachtelstapels auch in dem kastenförmigen Gehäuse gewährleistet ist.

Diese Aufgabe wird erfindungsgemäß durch das Verfahren gemäß dem Anspruch 1 gelöst. Dabei ist vorgesehen, dass der Faltschachtelstapel vor dem Ansetzen der Greifbacken mittels zumindest zweier Druckelemente in Stapelrichtung zusammengedrückt und vorgespannt wird und dass anschließend die Saugvorrichtung mittels der Verstellvorrichtung auf den Faltschachtelstapel abgesenkt wird, nachdem der Faltschachtelstapel mittels der Spannvorrichtung zwischen den Greifbacken eingespannt ist.

Dabei ist vorgesehen, dass die Saugvorrichtung mit der Oberfläche des Faltschachtelstapels in Anlage gebracht und die Saugvorrichtung während des Umsetzens des Faltschachtelstapels zumindest zeitweise und insbesondere ständig aktiviert wird. Dabei wird die Saugvorrichtung mittels einer Verstellvorrichtung erst dann auf den Faltschachtelstapel abgesenkt, nachdem der Faltschachtelstapel mittels der Spannvorrichtung zwischen den Greifbacken eingespannt ist. Auf diese Weise ist sichergestellt, dass die Saugvorrichtung in Anlage mit dem bereits zusammengedrückten Faltschachtelstapel kommt. Insbesondere kann vorgesehen sein, dass die Saugvorrichtung aktiviert wird und den Faltschachtelstapel ansaugt und stabilisiert, bevor der Faltschachtelstapel mittels der Umsetzvorrichtung angehoben wird.

Gemäß der Erfindung ist vorgesehen, dass die Saugvorrichtung erst nach dem Spannen bzw. Zusammendrücken des Faltschachtelstapels mittels der Greifbacken mit dem Faltschachtelstapel in Anlage gebracht werden. Dies hat den Vorteil, dass die mit den Saugern in Anlage tretende Oberfläche des Faltschachtelstapels vorzugsweise luftdicht zusammengespannt ist, so dass die Wirkung der Saugvorrichtung verbessert ist.

Je nach Form und Ausgestaltung der Faltschachteln ist das Maß, um das der Faltschachtelstapel zusammengedrückt werden kann, sehr unterschiedlich. Um sicherzustellen, dass der Faltschachtelstapel von den Greifbacken zuverlässig aufgenommen und zusammengedrückt und eingespannt werden kann, ist gemäß der Erfindung vorgesehen, dass der Faltschachtelstapel vor dem Ansetzen der Greifbacken mittels zumindest zweier Druckelemente in Stapelrichtung auf ein vorbestimmtes Maß vorgespannt wird.

In einer möglichen Ausgestaltung der Erfindung kann vorgesehen sein, dass der Faltschachtelstapel in einem kastenförmigen, nach oben offenen Gehäuse bzw. einer Kiste angeordnet ist und mittels der Umsetzvorrichtung aus dem Gehäuse oder der Kiste entnommen wird. Dabei kann vorgesehen sein, dass die Druckelemente die Gehäuse- oder Kistenwandung an den Stirnseiten des Faltschachtelstapels von außen durchgreifen. Auf diese Weise ist es möglich, auf den im Gehäuse bzw. in der Kiste befindlichen Faltschachtelstapel eine den Faltschachtelstapel zusammendrückende Vorspannkraft aufzubringen. In diesem Zustand sind die Stirnseiten des Faltschachtelstapels von der Wandung des Gehäuses bzw. der Kiste abgehoben, so dass die Greifbacken in den so gebildeten Zwischenraum eingreifen können und mit dem Faltschachtelstapel stirnseitig in Anlage treten können. Der Faltschachtelstapel wird dann mittels der Greifbacken weiter zusammengedrückt und eingespannt.

Für die Saugvorrichtung sind vorzugsweise mehrere in Spannrichtung hintereinander angeordnete Sauger vorgesehen, die beispielsweise gleichzeitig aktiviert werden. Alternativ kann auch ein Saugkissen mit dem genannten Aufbau verwendet werden.

Der Faltschachtelstapel wird mittels der Greifbacken vorzugsweise an seinen Stirnseiten kontaktiert und zusammengedrückt. Wenn ein derartiger Faltschachtelstapel ohne Einwirkung der Saugvorrichtung angehoben wird, treten in der Mitte des Faltschachtelstapels infolge des Eigengewichts des Faltschachtelstapels die größten Biegemomente auf. Vorzugsweise ist deshalb vorgesehen, dass die Saugvorrichtung, d.h. zumindest einer der Sauger und insbesondere zwei oder drei Sauger und/oder das Saugkissen im mittleren Bereich der Länge des Faltschachtelstapels in dessen zwischen den Greifbacken eingespannten Zustand mit der Oberfläche des Faltschachtelstapels in Anlage gebracht werden. Insbesondere können der oder die Sauger und/oder das Saugkissen in den beiden mittleren Vierteln der Länge des Faltschachtelstapels in dessen zusammengedrückten Zustand angeordnet sein.

Eine Faltschachtelstapel-Umsetzvorrichtung zeichnet sich dadurch aus, dass die Saugvorrichtung mittels einer Verstellvorrichtung relativ zu den Greifbacken so verstellbar ist, dass die Saugvorrichtung mit der Oberfläche des vorzugsweise genannten bzw. zusammengedrückten Faltschachtelstapels wahlweise in Anlage oder außer Anlage bringbar ist.

Auch erfindungsgemäß wird von der Grundüberlegung ausgegangen, den Faltschachtelstapel während des Umsetzvorgangs zumindest zeitweise und vorzugsweise ständig durch zusätzliche Lager abzustützen. Zu diesem Zweck ist die Saugvorrichtung vorgesehen, die mit der Oberfläche des Faltschachtelstapels in Anlage gebracht und dann aktiviert wird, wodurch der Faltschachtelstapel zusätzlich gehalten ist. Dabei ist vorgesehen, dass die Saugvorrichtung mittels der Verstellvorrichtung relativ zu den Greifbacken verstellbar ist. Durch diese Verstellung der relativen Position zwischen einerseits den Greifbacken und andererseits der Saugvorrichtung ist eine einfache Anpassung an die Geometrie des aufzunehmenden Faltschachtelstapels möglich. Die Greifbacken können mit der Wirkungslinie ihrer Spannkraft auf die Längsmittelachse des Faltschachtelstapels ausgerichtet werden und die Saugvorrichtung kann mit der Oberseite des Faltschachtelstapels vorzugsweise nachträglich in Anlage gebracht werden. Auf diese Weise ist eine optimale Lage der Wirkungslinie der Spannkraft der Greifbacken und eine gute Anlage der Saugvorrichtung an der Oberseite des Faltschachtelstapels gewährleistet.

Die Saugvorrichtung kann mittels der Verstellvorrichtung senkrecht zu der Spannrichtung der Greifbacken verstellbar sein. Die Spannrichtung der Greifbacken entspricht vorzugsweise der Stapelrichtung des Faltschachtelstapels. Der Faltschachtelstapel besitzt in seinem zusammengedrückten, eingespannten Zustand eine strukturierte Mantelfläche, die von den aufeinanderliegenden Faltschachteln gebildet ist und eine rillenartige Struktur besitzt. Es hat sich gezeigt, dass die Unebenheiten der Mantelfläche durch die entsprechend dimensionierte Saugvorrichtung ausgeglichen werden können, so dass zwischen der Saugvorrichtung und dem Faltschachtelstapel eine große Haltekraft übertragen werden kann.

Der Faltschachtelstapel kann unmittelbar vor der Aufnahme durch die Umsetzvorrichtung horizontal ausgerichtet werden, so dass eine horizontale Stapelrichtung gegeben ist und alle Faltschachteln vertikal ausgerichtet sind und mit ihrer unteren Kante auf einer Stellfläche aufliegen. Wenn ein derartiger Faltschachtelstapel von den Greifbacken an seine entgegengesetzten Stirnseiten zusammengedrückt und zwischen den Greifbacken eingespannt wird und dann die Umsetzvorrichtung den Faltschachtelstapel anhebt, wirken infolge des Eigengewichts des Faltschachtelstapels und infolge dynamischer Effekte senkrecht nach unten gerichtete Querkräfte und Biegemomente auf den Faltschachtelstapel ein. Die Saugvorrichtung wird vor dem Anheben des Faltschachtelstapels vorzugsweise von oben mit der Oberseite des horizontal ausgerichteten Faltschachtelstapels in Anlage gebracht und aktiviert, so dass insbesondere beim Anheben des Faltschachtelstapels eine zusätzliche Abstützung gegeben ist.

Als Saugvorrichtung kann ein einzelner, vorzugsweise linienförmiger und sich in Längsrichtung des Faltschachtelstapels, d.h. in Stapelrichtung erstreckender Sauger vorgesehen sein. Alternativ ist es möglich, mehrere einzelne Sauger vorzusehen, die vorzugsweise in gegenseitigem Abstand angeordnet sind. Die Sauger können in zumindest einer in Spannrichtung verlaufenden Reihe angeordnet sein und werden vorzugsweise von einer gemeinsamen Unterdruckquelle versorgt.

Die Spannvorrichtung kann ein mit dem Faltschachtelstapel in Anlage bringbares Saugkissen aufweisen. Mit der Verwendung eines Saugkissens ist der Vorteil verbunden, dass einerseits eine großflächige oder sogar vollflächige Aufbringung von Saugkräften auf die Oberfläche des Faltschachtelstapels möglich ist und dass andererseits bei einer elastischen Verformung des Saugkissens Unebenheiten des Faltschachtelstapels ausgeglichen werden können.

Vorzugsweise besteht das Saugkissen aus einem elastisch verformbaren, aufgeschäumten Kunststoff-Material und insbesondere aus Schaumstoff.

Das Saugkissen kann aus einem luftdurchlässigen Material, beispielsweise einem offenporigen oder offenzelligen Schaumstoff gebildet sein, wobei zusätzlich dazu in dem Saugkissen auch Durchgangsöffnungen ausgebildet sein können.

Wenn das Saugkissen aus einem luftundurchlässigen Material besteht, sollten in dem Saugkissen eine Vielzahl von Durchgangsöffnungen ausgebildet sein, die insbesondere als Durchgangsbohrungen ausgestaltet und vorzugweise in einen regelmäßigen Raster oder Muster angeordnet sind.

Als Manipulator, mittels dessen die Umsetzbewegung für den Faltschachtelstapel ausgeführt wird, kann beispielsweise ein Gelenkarmroboter oder auch ein sogenannter kollaborativer Roboter (COBOT) verwendet werden.

Die beiden Greifbacken sind aufeinander zu und zur Freigabe des Faltschachtelstapels auch voneinander weg bewegbar. Diese Bewegung kann hydraulisch, pneumatisch oder mittels eines Elektromotors, beispielsweise eines Servomotors erfolgen. Dabei kann vorgesehen sein, dass eine Greifbacke fest an einem Längsträger angebracht und die andere Greifbacke entlang einer Linearführung verstellbar an dem Längsträger gehalten ist.

Die Saugvorrichtung ist vorzugsweise an einem Halter gelagert, der mittels der Verstellvorrichtung in Richtung des Faltschachtelstapels bewegt und von dem Faltschachtelstapel zurückgezogen werden kann. Vorzugsweise ist die Verstellvorrichtung ebenfalls an dem die Greifbacken lagernden Längsträger gehalten.

Die Verstellung der Saugvorrichtung kann pneumatisch, hydraulisch oder mittels eines Motors, insbesondere eines Servomotors erfolgen.

In bevorzugter Ausgestaltung der Erfindung ist vorgesehen, dass ein kastenförmiges Gehäuse vorgesehen ist, in dem der Faltschachtelstapel aufnehmbar ist. Auf entgegengesetzten Seiten des Gehäuses kann jeweils zumindest ein Druckelement angeordnet sein. Mit den Druckelementen kann auf den in dem Gehäuse angeordneten Faltschachtelstapel eine den Faltschachtelstapel zusammendrückende Spannkraft aufgebracht werden.

Vorzugsweise sind die Druckelemente auf der Außenseite des Gehäuses angeordnet und durchdringen jeweils eine Wandung des Gehäuses, so dass der Gehäuseinnenraum beim Einsetzen des Faltschachtelstapels in das Gehäuse von den Druckelementen frei ist.

Bei den Druckelementen kann es sich um verstellbare Bolzen handeln, die die Wandung des Gehäuses durchdringen.

Vorzugweise sind die Druckelemente mittels einer Antriebsvorrichtung verstellbar, wobei die Antriebsvorrichtung von einem Elektromotor oder von einem hydraulischen Antrieb oder von einem pneumatischen Antrieb gebildet sein kann. Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine perspektivische Ansicht einer erfindungsgemäßen Faltschachtelstapel-Umsetzvorrichtung,
- Fig. 2: eine vergrößerte Darstellung der Greifvorrichtung und des Faltschachtelstapels in einer 1. Phase der Umsetzung,
- Fig. 3: eine vergrößerte Darstellung der Greifvorrichtung und des Faltschachtelstapels in einer 2. Phase der Umsetzvorrichtung
- Fig. 4: eine vergrößerte Darstellung der Greifvorrichtung und des Faltschachtelstapels in einer 3. Phase der Umsetzung,
- Fig. 5: eine vergrößerte Darstellung der Greifvorrichtung und des Faltschachtelstapels in einer 4. Phase der Umsetzung,
- Fig. 6: eine vergrößerte Darstellung der Greifvorrichtung und des Faltschachtelstapels in einer 5. Phase der Umsetzung,
- Fig. 7: eine vergrößerte Darstellung der Greifvorrichtung und des Faltschachtelstapels in einer 6. Phase der Umsetzung und
- Fig. 8: eine Greifvorrichtung mit einer alternativen Ausgestaltung der Saugvorrichtung.

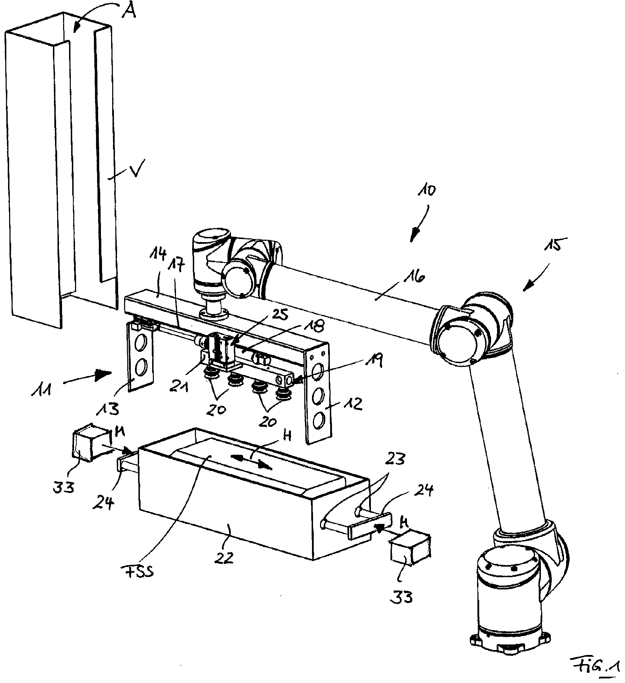

Figur 1 zeigt eine Ansicht einer Faltschachtelstapel-Umsetzvorrichtung 10, mittels der ein Faltschachtelstapel FSS umgesetzt werden kann, der in einem kastenförmigen Gehäuse 22 in horizontaler Ausrichtung, d.h. mit horizontaler Stapelrichtung H aufgenommen ist. In den Seitenwänden des Gehäuses 22, an denen der Faltschachtelstapel FSS mit seinen Stirnseiten anliegt, sind jeweils zwei Durchgangslöcher 23 ausgebildet. Auf den entgegengesetzten Stirnseiten des Faltschachtelstapels FSS ist außerhalb des Gehäuses 22 jeweils ein Druckelement 24 angeordnet. Jedes Druckelement 24 durchdringt die Wandung des Gehäuses 22 an den Durchgangslöchern 23 und kann in Richtung des Faltschachtelstapels FSS bewegt werden. Zu diesem Zweck ist jedem Druckelement 24 eine Antriebsvorrichtung 33 zugeordnet, mittels der auf das Druckelement 24 eine Verstellkraft aufgebracht werden kann, wie es durch den Pfeil M angedeutet ist. Wenn die auf entgegengesetzten Seiten des Gehäuses 22 angeordneten Druckelemente 24 aufeinander zu bewegt werden, kann der Faltschachtelstapel FSS in Stapelrichtung H zusammengedrückt bzw. vorgespannt werden.

Die Faltschachtelstapel-Umsetzvorrichtung 10 soll den Faltschachtelstapel FSS aus dem kastenförmigen Gehäuse 22 entnehmen und in einen vertikal ausgerichteten Schacht V von oben einsetzen, wie es durch den Pfeil A angedeutet ist.

Die Faltschachtelstapel-Umsetzvorrichtung 10 weist einen Manipulator 15 in Form eines Mehrgelenkroboters 16 auf, der als kollaborativer Roboter (COBOT) ausgestaltet sein kann. Der Manipulator 15 trägt an seinem vorderen Ende eine Greifvorrichtung 11 zur Aufnahme des Faltschachtelstapels FSS. Die Greifvorrichtung 11 umfasst einen Längsträger 14, an dessen einem Ende eine Greifbacke 12 fest angebracht ist. Auf der Unterseite des Längsträgers 14 ist eine Linearführung 17 angeordnet, auf der eine weitere Greifbacke 13 verschieblich sitzt. Mittels eines Antriebs 18 kann die weitere Greifbacke 13 längs der Linearführung 17 verschoben werden, so dass der Abstand zwischen den Greifbacken 12 und 13 vergrößert oder verringert werden kann.

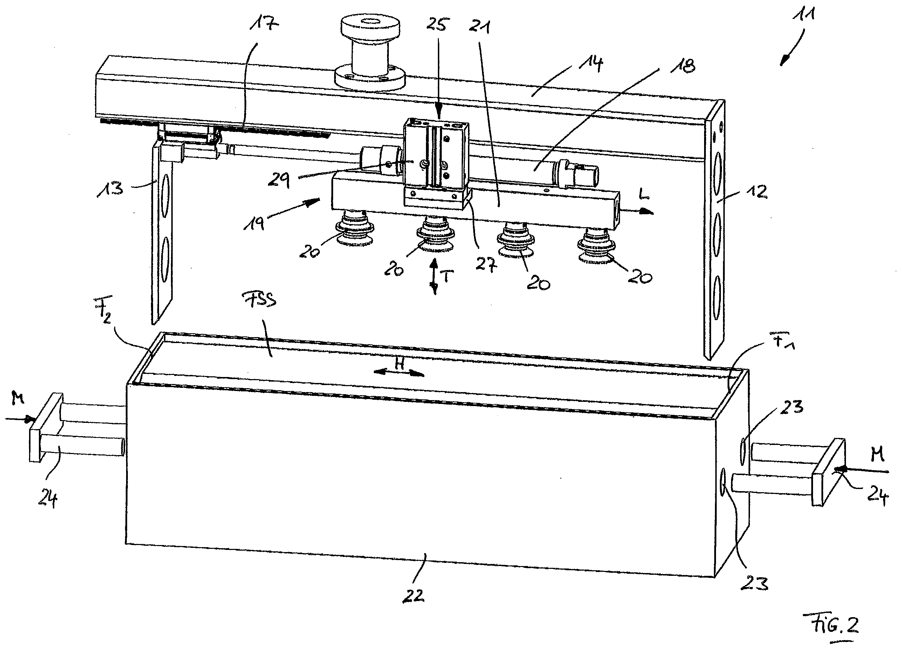

Desweiteren ist eine Saugvorrichtung 19 mit einem stabförmiger Halter 21 vorgesehen, der sich parallel zum Längsträger 14 erstreckt und auf seiner Unterseite vier nebeneinander auf Abstand in einer Reihe angeordnete Sauger 20 trägt. Die Sauger 20 können mit Unterdruck beaufschlagt werden, wie es durch den Pfeil L (s. Fig.2) angedeutet ist.

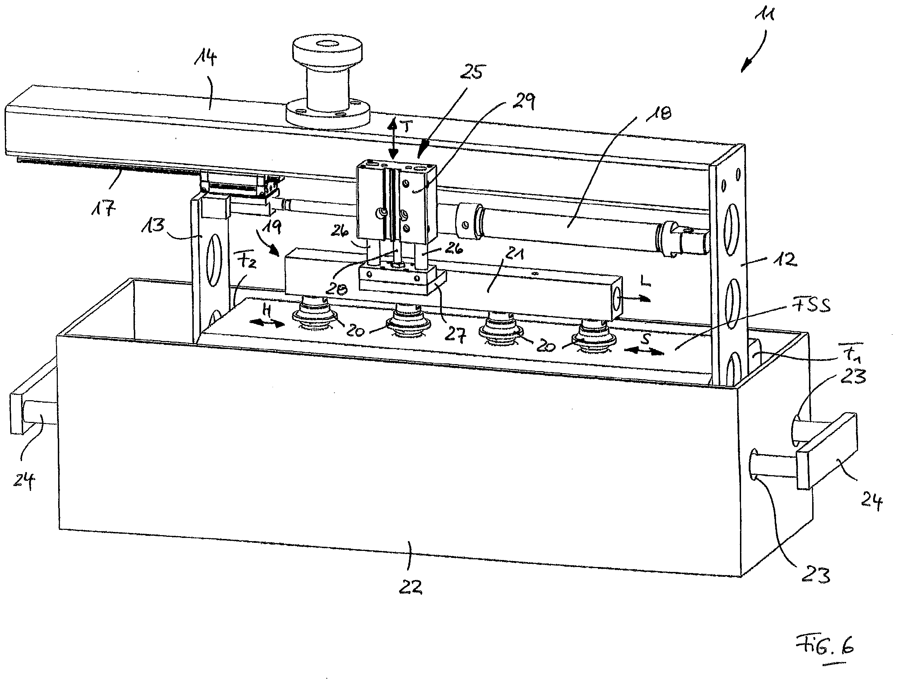

Insbesondere Figur 6 zeigt, ist der Halter 21 mit einer Verstellvorrichtung 25 über eine Halteplatte 27 verbunden, die zwei vertikale Haltestangen 26 aufweist, die verschieblich in einen Lagerblock 29 geführt sind. Zwischen dem Lagerblock 29 und der Halteplatte 27 ist eine Schubstange 28 wirksam, durch deren Aktivierung die Halteplatte 27 zusammen mit der daran befestigten Saugvorrichtung 19 in Richtung der Oberseite des Faltschachtelstapels FSS abgesenkt und angehoben werden kann, wie es durch den Doppelpfeil T in Figur 2 angedeutet ist.

Im Folgenden sollen die einzelnen Phasen der Umsetzung des Faltschachtelstapels FSS aus dem kastenförmigen Gehäuse 22 in den Schacht V anhand der Figuren 2 bis 7 im Einzelnen erläutert werden.

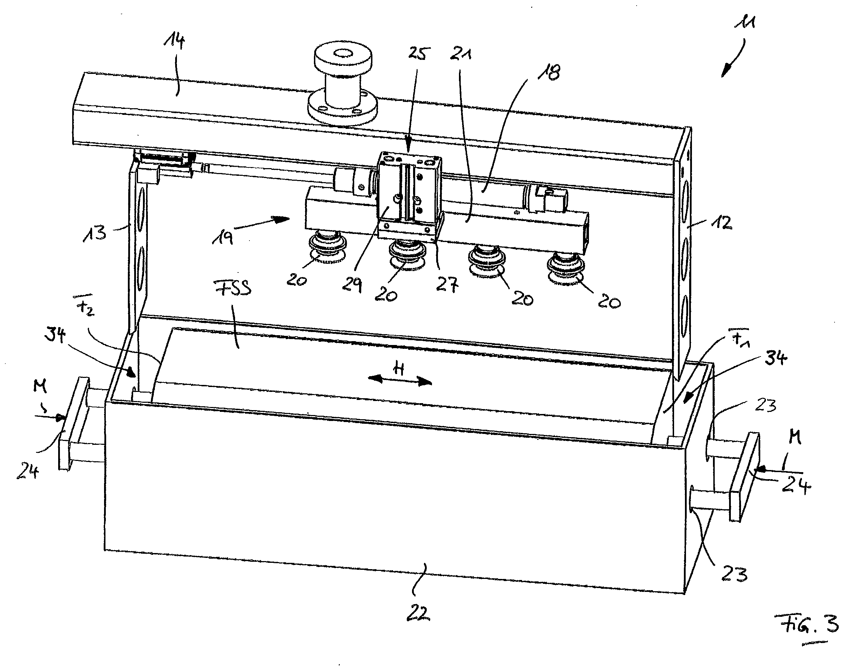

Figur 2 zeigt die Ausgangsposition, wobei der Faltschachtelstapel FSS in horizontaler Ausrichtung, d.h. mit vertikaler Stapelrichtung H in dem nach oben offenen Gehäuse 22 angeordnet ist und mit seinen Stirnseiten F₁ und F₂ an den Seitenwänden des Gehäuses 22 anliegt. Um die Stirnseiten F₁ und F₂ des Faltschachtelstapels FSS von den Seitenwänden des Gehäuses 22 abzurücken, werden die Antriebsvorrichtungen 33 aktiviert, wodurch die Druckelemente 24 von außen durch die Durchgangslöcher 23 des Gehäuses 22 eingeführt und die beiden Druckelemente 24 aufeinander zu bewegt werden, wodurch der Faltschachtelstapel FSS innerhalb des Gehäuses 22 in Stapelrichtung H um ein geringes Maß zusammengedrückt wird, wie es in Figur 3 dargestellt ist. Dabei werden die Stirnseiten F₁ und F₂ von den Seitenwänden des Gehäuses 22 abgehoben, so dass Zwischenräume 34 zwischen den Stirnseiten F₁ bzw. F₂ und den Seitenwänden des Gehäuses gebildet sind (s. Fig.3).

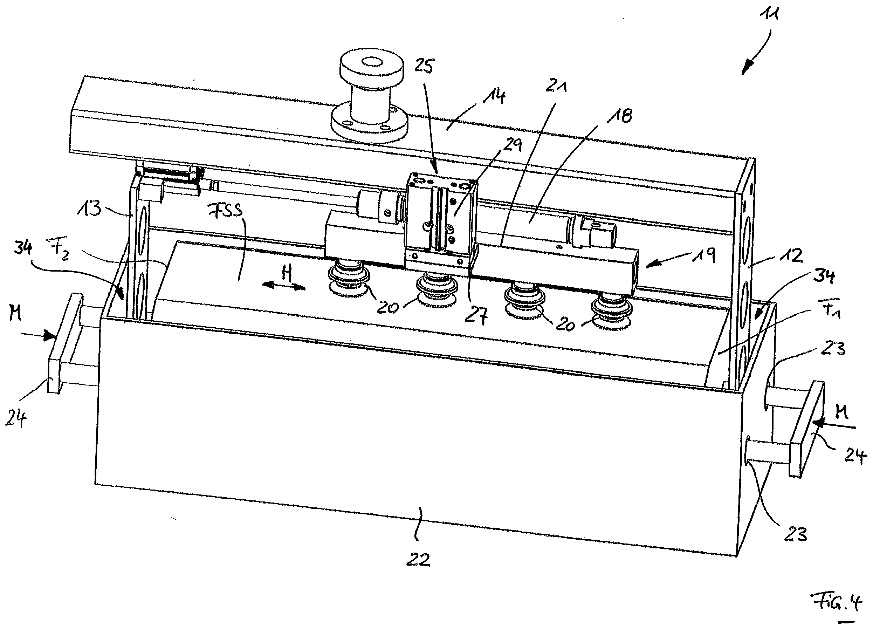

Die Greifvorrichtung 11 wird dann oberhalb des Gehäuses 22 so positioniert, dass sich die vertikalen Greifbacken 12, 13 jeweils genau über einem der Zwischenräume befinden, die zwischen den Stirnseiten F₁ bzw. F₂ und den Seitenwänden des Gehäuses 22 gebildet sind. Die Greifvorrichtung 11 wird dann mittels des Manipulators 15 abgesenkt, so dass die Greifbacken 12 und 13 in die Zwischenräume 34 zwischen den Stirnseiten F₁ und F₂ des Faltschachtelstapels FSS und den Wänden des Gehäuses 22 eingreifen, wie es in Figur 4 dargestellt ist. Die Saugvorrichtung 19 befindet sich dabei noch mit Abstand oberhalb des Faltschachtelstapels FSS.

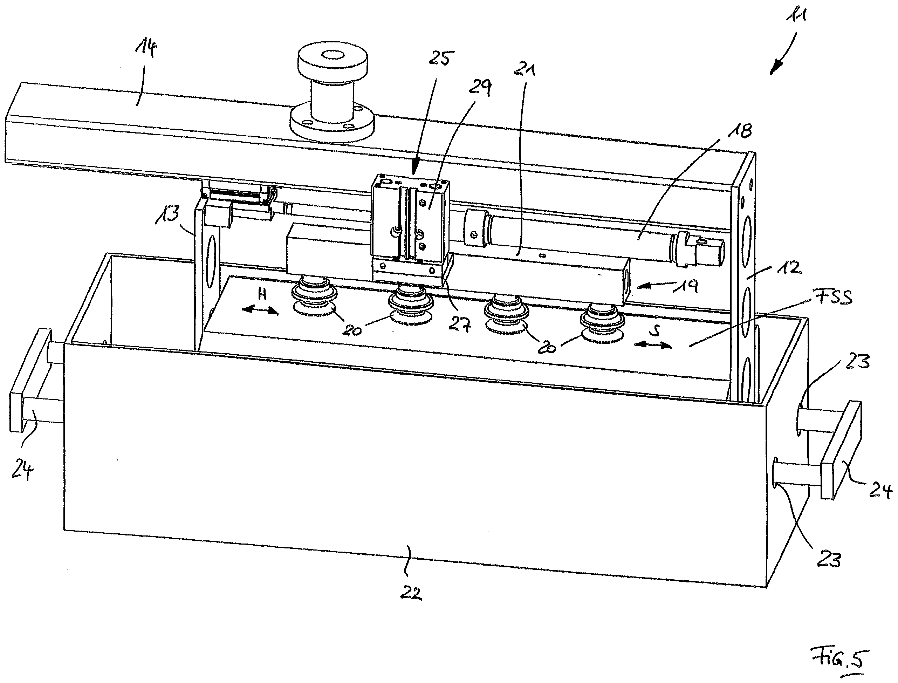

In einem weiteren Schritt wird der Antrieb 18 aktiviert, wodurch die gemäß Figur 4 linke Greifbacke 13 längs der Linearführung 17 auf die gemäß Figur 4 rechte Greifbacke zu bewegt wird. Die Greifbacken 12 und 13 kommen mit den Stirnseiten F₁ und F₂ des Faltschachtelstapel FSS in Anlage und drücken diesen in Stapelrichtung H zusammen, so dass der Faltschachtelstapel FSS zwischen den Greifbacken 12 und 13 unter enger Packung eingespannt ist, wie es in Figur 5 gezeigt ist. Eine Spannrichtung S fällt dabei mit der Stapelrichtung H zusammen.

Sobald die Greifbacken 12 und 13 ihre gewünschte Relativposition erreicht haben und der Faltschachtelstapel FSS in ausreichendem Maße komprimiert und eingespannt ist, wird die Saugvorrichtung 19 mittels der Aktivierung der Verstellvorrichtung 25 soweit abgesenkt, dass die Sauger 20 auf der Oberfläche des Faltschachtelstapels FSS aufliegen, wie es in Figur 6 dargestellt ist. Anschließend werden die Sauger 20 mit einem Unterdruck beaufschlagt (Pfeil L), so dass der Faltschachtelstapel FSS von den Saugern 20 angesaugt wird. Dieser Zustand ist in Figur 6 dargestellt.

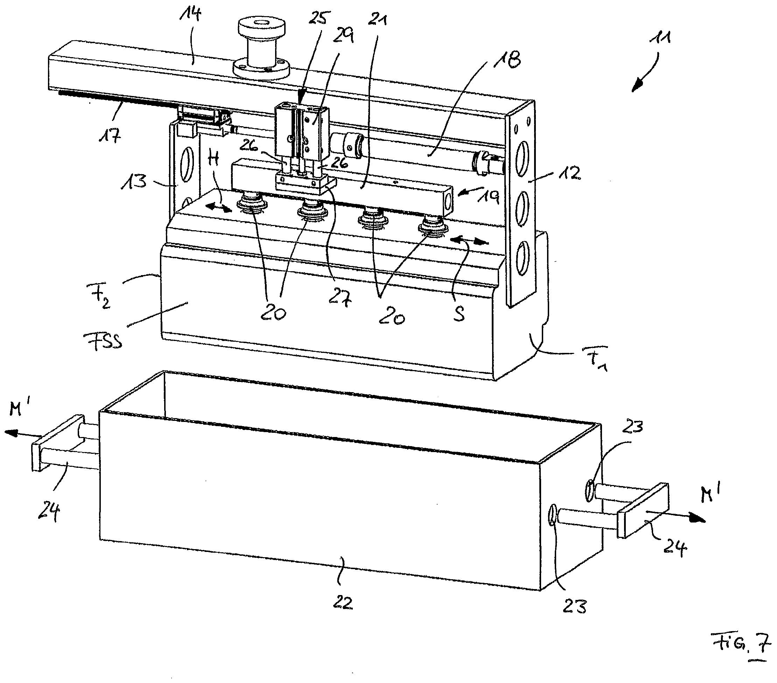

Anschließend wird der Manipulator 15 aktiviert, der die Greifvorrichtung 11 vertikal nach oben zieht und somit den Faltschachtelstapel FSS aus dem Gehäuse 22 herausnimmt. In diesem, in Figur 7 gezeigten Zustand ist der Faltschachtelstapel FSS an seinen Stirnseiten F₁ und F₂ durch die Greifbacken 12 und 13 eingespannt sowie zusätzlich durch die auf der oberen Oberfläche des Faltschachtelstapels FSS aufgesetzten Sauger 20 an einem Herunterfallen gehindert. In diesem Zustand kann der Faltschachtelstapel FSS mittels des Manipulators 15 in gewünschter Weise ausgerichtet und in den Schacht V von oben eingesetzt werden. Die Druckelemente 24 werden mittels der Antriebsvorrichtungen 33 aus dem Gehäuse 22 zurückgezogen, wie es in Figur 7 durch die Pfeile M' angedeutet ist.

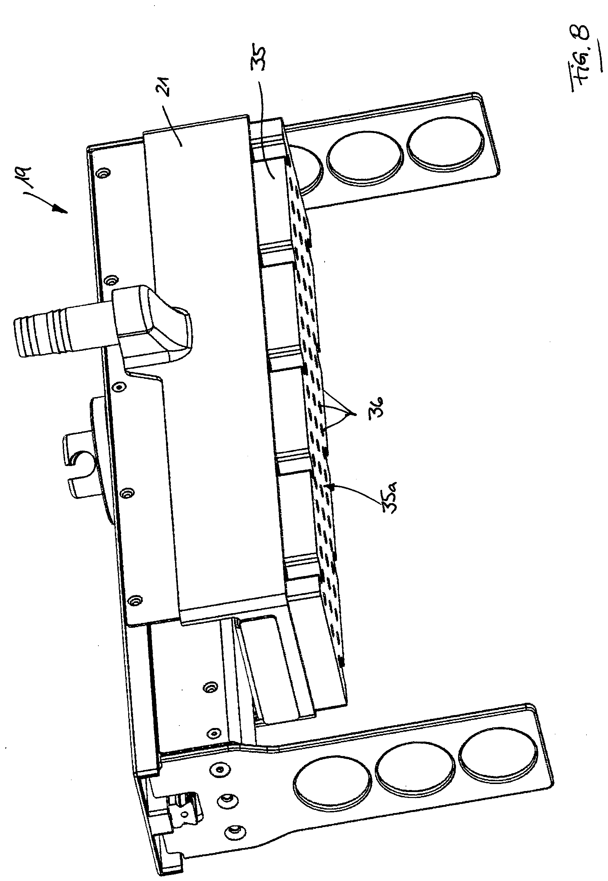

Figur 8 zeigt eine alternative Ausgestaltung der Saugvorrichtung 19. Bei dem vorherigen Ausführungsbeispiel waren mehrere einzelne Sauger vorgesehen, die nunmehr durch ein Saugkissen 35 ersetzt sind, das aus Schaumstoff bestehen kann. Das Saugkissen 35 besitzt eine unterseitige Saugfläche 35a, mit der es beim Absenken der Saugvorrichtung 19 großflächig oder sogar vollflächig auf die Oberseite des zusammengedrückten Faltschachtelstapels FSS aufgelegt werden kann.

Das Saugkissen 35 besteht aus einem offenporigen und damit luftdurchlässigen Schaumstoffmaterial, zusätzlich dazu können jedoch auch Durchgangsöffnungen 36 in das Saugkissen 35 eingebracht sein.

Auf der dem Faltschachtelstapel FSS abgewandten Seite des Saugkissens 35 ist in dem Halter 21 eine nicht dargestellte Unterdruckkammer ausgebildet, so dass auf der Saugfläche 35a des Saugkissens 35 ein Unterdruck erzeugbar ist.

Wenn die Saugvorrichtung 19 in genannter Weise auf die Oberseite des Faltschachtelstapels FSS abgesenkt wird, wird das Saugkissen 35 mit seiner Saugfläche 35a gegen die Oberseite des Faltschachtelstapels FSS gedrückt und nach Anlegen eines Unterdrucks an der Saugfläche 35a wird auf den Faltschachtelstapel FSS eine großflächige Saug- und Haltekraft aufgebracht.

## Patentansprüche

1. Verfahren zum Umsetzen eines Faltschachtelstapels (FSS) in einer Verpackungsmaschine, wobei der Faltschachtelstapel (FSS) zwischen zumindest zwei Greifbacken (12, 13) einer Greifvorrichtung (11) in einer Spannrichtung (S), die der Stapelrichtung (H) des Faltschachtelstapels (FSS) entspricht, eingespannt und dann die Greifvorrichtung (11) zusammen mit dem Faltschachtelstapel (FSS) mittels eines Manipulators (15) umgesetzt wird, wobei der Faltschachtelstapel (FSS) vor dem Ansetzen der Greifbacken (12) mittels zumindest zweier Druckelemente (24) in Stapelrichtung (H) zusammengedrückt und vorgespannt wird,
**dadurch gekennzeichnet, dass**
eine Saugvorrichtung (19) mit der Oberfläche des Faltschachtelstapels (FSS) in Anlage gebracht und die Saugvorrichtung (19) während des Umsetzens des Faltschachtelstapels (FSS) zumindest zeitweise aktiviert wird, wobei die Saugvorrichtung (19) mittels einer Verstellvorrichtung (25) auf den Faltschachtelstapel (FSS) abgesenkt wird, nachdem der Faltschachtelstapel (FSS) mittels der Spannvorrichtung (S) zwischen den Greifbacken (12, 13) eingespannt ist.

2. Verfahren nach Anspruch 1, **dadurch gekennzeichnet, dass** das Vorspannen des Faltschachtelstapels (FSS) in einem kastenförmigen Gehäuse (22) erfolgt.

3. Verfahren nach Anspruch 2, **dadurch gekennzeichnet, dass** die Druckelemente (24) durch die Wandung (22a) des Gehäuses (22) hindurchbewegt und verstellt werden.

4. Verfahren nach Anspruch 3, **dadurch gekennzeichnet, dass** eine Faltschachtelstapel-Umsetzvorrichtung (10) mit einer an einem verstellbaren Manipulator (15) angeordneten Greifvorrichtung (11) vorgesehen ist, die zumindest zwei in einer Spannrichtung (S) aufeinander zu bewegbare Greifbacken (12, 13) aufweist, zwischen denen der Faltschachtelstapel (FSS) einspannbar ist, wobei der Greifvorrichtung (11) eine Saugvorrichtung (19) zugeordnet ist, die mittels einer Verstellvorrichtung (25) relativ zu den Greifbacken (12, 13) so verstellbar ist, dass die Saugvorrichtung (19) mit der Oberfläche des Faltschachtelstapels (FSS) wahlweise in Anlage oder außer Anlage bringbar ist, wobei ein kastenförmiges Gehäuse (22) vorgesehen ist, in dem der Faltschachtelstapel (FSS) aufnehmbar ist, wobei auf entgegengesetzten Seiten des Gehäuses (22) jeweils zumindest ein Druckelement (24) angeordnet ist, wobei mit den Druckelementen (24) auf den in dem Gehäuse (22) angeordneten Faltschachtelstapel (FSS) eine den Faltschachtelstapel (FSS) zusammendrückende Spannkraft aufbringbar ist, wobei die Druckelemente (24) jeweils eine Wandung (22a) des Gehäuses (22) durchdringen.

5. Verfahren nach Anspruch 4, **dadurch gekennzeichnet, dass** die Druckelemente (24) die Wandung (22a) des Gehäuses (22) durchdringende, verstellbare Bolzen (30) aufweisen.

6. Verfahren nach einem der Ansprüche 4 oder 5, **dadurch gekennzeichnet, dass** die Druckelemente (24) mittels einer Antriebsvorrichtung (33) verstellt werden.

7. Verfahren nach Anspruch 6, **dadurch gekennzeichnet, dass** die Antriebsvorrichtung (31) von einem Elektromotor oder von einem hydraulischen Antrieb oder von einem pneumatischen Antrieb gebildet ist.

8. Verfahren nach einem der Ansprüche 1 bis 7, **dadurch gekennzeichnet, dass** die Greifbacken (12, 13) nach dem Vorspannen des Faltschachtelstapels (FSS) mittels der Druckelemente (24) in Zwischenräume (32) zwischen den Stirnseiten (F₁, F₂) des Faltschachtelstapels (FSS) und den Wandungen (22a) des Gehäuses (22) eingeführt werden.

9. Verfahren nach Anspruch 8, **dadurch gekennzeichnet, dass** die Greifbacken (12, 13) in die Zwischenräume (F₁, F₂) gleichzeitig eingeführt werden.

## Claims

1. A method for transferring a folding box stack (FSS) in a packaging machine, the folding box stack (FSS) being clamped in between at least two gripping jaws (12, 13) of a gripping apparatus (11) in a clamping direction (S) corresponding to the stack direction (H) of the folding box stack (FSS), and the gripping apparatus (11) then being transferred together with the folding box stack (FSS) by means of a manipulator (15), wherein the folding box stack (FSS) is compressed and prestressed in the stack direction (H) by means of at least two pressure elements (24) before the attachment of the gripping jaws (12), **characterized in that** a suction apparatus (19) being brought into contact with the surface of the folding box stack (FSS), and the suction apparatus (19) being activated at least temporarily during the transfer of the folding box stack (FSS), wherein the suction apparatus (19) is lowered onto the folding box stack (FSS) by means of an adjusting apparatus (25) after the folding box stack (FSS) is clamped in between the gripping jaws (12, 13) by means of the clamping apparatus (S).

2. The method as claimed in claim 1, **characterized in that** the prestressing of the folding box stack (FSS) takes place in a box-shaped housing (22).

3. The method as claimed in claim 2, **characterized in that** the pressure elements (24) are moved through the wall (22a) of the housing (22) and are adjusted.

4. The method as claimed in claim 3, **characterized in that** a folding box stack transferring apparatus (10), with a gripping apparatus (11) is provided which is arranged on an adjustable manipulator (15) and has at least two gripping jaws (12, 13) which can be moved toward one another in a clamping direction (S) and between which the folding box stack (FSS) can be clamped, the gripping apparatus (11) being assigned a suction apparatus (19) which can be adjusted by means of an adjusting apparatus (25) relative to the gripping jaws (12, 13) in such a way that the suction apparatus (19) can be brought selectively into or out of contact with the surface of the folding box stack (FSS), wherein a box-shaped housing (22) is provided, in which the folding box stack (FSS) can be received, and wherein at least one pressure element (24) is arranged on each opposed sides of the housing (22), wherein a clamping force which compresses the folding box stack (FSS) can applied by way of the pressure elements (24) to the folding box stack (FSS) which is arranged in the housing (22), wherein the pressure elements (24) each penetrate the wall (22a) of the housing (22).

5. The method as claimed in claim 4, **characterized in that** the pressure elements (24) have adjustable bolts (30) which penetrate the wall (22a) of the housing (22).

6. The method as claimed in one of claims 4 or 5, **characterized in that** the pressure elements (24) are adjusted by means of a drive apparatus (33).

7. The method as claimed in claim 6, **characterized in that** the drive apparatus (31) is formed by an electric motor or by a hydraulic drive or by a pneumatic drive.

8. The method as claimed in one of the claims 1 to 7, **characterized in that**, after the prestressing of the folding box stack (FSS) by means of the pressure elements (24), the gripping jaws (12, 13) are introduced into intermediate spaces (32) between the end sides (F₁, F₂) of the folding box stack (FSS) and the walls (22a) of the housing (22).

9. The method as claimed in claim 8, **characterized in that** the gripping jaws (12, 13) are introduced at the same time into the intermediate spaces (F₁, F₂).

## Revendications

1. Procédé permettant de déplacer un empilement de boîtes pliantes (FSS) dans une machine d'emballage, dans lequel l'empilement de boîtes pliantes (FSS) est serré entre au moins deux mâchoires de préhension (12, 13) d'un dispositif de préhension (11) dans une direction de serrage (S) qui correspond à la direction d'empilement (H) de l'empilement de boîtes pliantes (FSS), et ensuite le dispositif de préhension (11) est déplacé conjointement avec l'empilement de boîtes pliantes (FSS) au moyen d'un élément manipulateur (15), dans lequel l'empilement de boîtes pliantes (FSS) est comprimé et précontraint dans la direction d'empilement (H) avant la mise en place des mâchoires de préhension (12) au moyen d'au moins deux éléments de pression (24),
**caractérisé en ce que**
un dispositif d'aspiration (19) est mis en contact avec la surface de l'empilement de boîtes pliantes (FSS) et le dispositif d'aspiration (19) est activé au moins temporairement pendant le déplacement de l'empilement de boîtes pliantes (FSS), dans lequel le dispositif d'aspiration (19) est abaissé sur l'empilement de boîtes pliantes (FSS) au moyen d'un dispositif de réglage (25), après que l'empilement de boîtes pliantes (FSS) a été serré entre les mâchoires de préhension (12, 13) au moyen du dispositif de serrage (S).

2. Procédé selon la revendication 1, **caractérisé en ce que** la précontrainte de l'empilement de boîtes pliantes (FSS) est effectuée dans un boîtier (22) en forme de caisson.

3. Procédé selon la revendication 2, **caractérisé en ce que** les éléments de pression (24) sont déplacés et réglés à travers la paroi (22a) du boîtier (22).

4. Procédé selon la revendication 3, **caractérisé en ce qu'**un dispositif de déplacement d'empilement de boîtes pliantes (10) comportant un dispositif de préhension (11) disposé sur un élément manipulateur (15) réglable est prévu, lequel dispositif de déplacement présente au moins deux mâchoires de préhension (12, 13) pouvant se déplacer l'une vers l'autre dans une direction de serrage (S) et entre lesquelles l'empilement de boîtes pliantes (FSS) peut être serré, dans lequel un dispositif d'aspiration (19) est associé au dispositif de préhension (11), lequel dispositif d'aspiration peut être réglé par rapport aux mâchoires de préhension (12, 13) au moyen d'un dispositif de réglage (25) de telle sorte que le dispositif d'aspiration (19) peut être amené au choix en contact ou hors de contact avec la surface de l'empilement de boîtes pliantes (FSS), dans lequel un boîtier (22) en forme de caisson est prévu, dans lequel l'empilement de boîtes pliantes (FSS) peut être reçu, dans lequel respectivement au moins un élément de pression (24) est disposé sur des côtés opposés du boîtier (22), dans lequel une force de serrage comprimant l'empilement de boîtes pliantes (FSS) peut être appliquée sur l'empilement de boîtes pliantes (FSS) disposé dans le boîtier (22) au moyen des éléments de pression (24), dans lequel les éléments de pression (24) traversent respectivement une paroi (22a) du boîtier (22).

5. Procédé selon la revendication 4, **caractérisé en ce que** les éléments de pression (24) présentent des boulons (30) réglables traversant la paroi (22a) du boîtier (22).

6. Procédé selon l'une des revendications 4 ou 5, **caractérisé en ce que** les éléments de pression (24) sont réglés au moyen d'un dispositif d'entraînement (33).

7. Procédé selon la revendication 6, **caractérisé en ce que** le dispositif d'entraînement (31) est formé par un moteur électrique ou par un entraînement hydraulique ou par un entraînement pneumatique.

8. Procédé selon l'une des revendications 1 à 7, **caractérisé en ce que** les mâchoires de préhension (12, 13) sont introduites, après la précontrainte de l'empilement de boîtes pliantes (FSS) au moyen des éléments de pression (24), dans des espaces intermédiaires (32) entre les faces frontales (F₁, F₂) de l'empilement de boîtes pliantes (FSS) et les parois (22a) du boîtier (22).

9. Procédé selon la revendication 8, **caractérisé en ce que** les mâchoires de préhension (12, 13) sont introduites simultanément dans les espaces intermédiaires (F₁, F₂).
